# EUROPÄISCHE PATENTANMELDUNG

(11) **EP 3 447 639 A1**
(43) Veröffentlichungstag der Anmeldung: **27.02.2019**
(21) Anmeldenummer: 17187207.0
(22) Anmeldetag: 22.08.2017
(51) Int. Cl.: G06F 9/44, G06F 9/54, G06F 17/30, G06F 8/35

(54) **VORRICHTUNG UND VERFAHREN ZUR KOPPLUNG EINER MASCHINE MIT EINER MEHRZAHL VON APPLIKATIONEN**

(71) Anmelder: Siemens Aktiengesellschaft, 80333 München (DE)
(72) Erfinder: Fischer, Jan-Gregor, 85604 Zorneding (DE)

(57) **Zusammenfassung**

Es wird eine Vorrichtung zur Kopplung einer Maschine, insbesondere einer Werkzeugmaschine, aufweisend eine Anzahl N von Datenquellen zur Bereitstellung von Daten der Maschine in datenquellenspezifischen Datenformaten mit einer Mehrzahl von Applikationen vorgeschlagen. Die Vorrichtung umfasst eine Transformations-Einheit, welche dazu eingerichtet ist, in einem der datenquellenspezifischen Datenformate vorliegende Daten einer der N Datenquellen in Daten eines generischen semantischen Datenmodells für die Applikationen zu transformieren und/oder in dem generischen semantischen Datenmodell vorliegende Daten einer der Applikationen in Daten eines der datenquellenspezifischen Datenformate für eine der N Datenquellen zu transformieren.

Damit stellt die Transformations-Einheit vorteilhafterweise Dateninteroperabilität zwischen der jeweiligen Applikation und der jeweiligen Datenquelle der Maschine her.

Ferner werden ein Verfahren und ein Computerprogrammprodukt zur Kopplung einer Maschine mit einer Mehrzahl von Applikationen vorgeschlagen.

## Beschreibung

Die vorliegende Erfindung betrifft eine Vorrichtung zur Kopplung einer Maschine, insbesondere einer Werkzeugmaschine, aufweisend eine Anzahl von Datenquellen zur Bereitstellung von Daten der Maschine in datenquellenspezifischen Datenformaten mit einer Mehrzahl von Applikationen. Des Weiteren betrifft die vorliegende Erfindung ein Verfahren und ein Computerprogrammprodukt, welches auf einer programmgesteuerten Einrichtung die Durchführung des Verfahrens veranlasst.

Das technische Gebiet der Erfindung betrifft insbesondere Edge-Computing, bei welchem Basisfunktionen von Steuerungsvorrichtungen von Werkzeugmaschinen, wie Sinumerik, Simotion oder Simatik, sowie von weiteren Feldgeräten und Sensoren, wie beispielsweise Kameras, durch leistungsfähige Applikationen auf Zusatzhardware erweitert werden. Beispielsweise optimieren derartige Applikationen NC-Programme (NC; numerical control (numerische Steuerung)) hinsichtlich Geschwindigkeit, Verschleiß, Energieaufwand und anderer Eigenschaften von Produktionsprozessen. Es sind ferner Applikationen bekannt, welche bei bevorstehenden Maschinen- oder Komponentenausfällen warnen, optimale Wartungszyklen planen und proaktiv Ratschläge für prädiktive Instandhaltungs-Aufgaben geben. Es gibt zahlreiche Anwendungsmöglichkeiten für derartige Applikationen.

Allerdings stellen Datenquellen, wie beispielsweise Sensoren oder Aktuatoren, der Maschine ihre Daten, die solche Applikationen verarbeiten sollen, herkömmlicherweise in datenquellenspezifischen Datenformaten bereit. Folglich wird herkömmlicherweise eine Applikation derart gebaut, dass sie Daten in dem jeweiligen datenquellenspezifischen Datenformat verarbeiten kann. Damit wird herkömmlicherweise die jeweilige Applikation spezifisch für ein Gerät oder eine Maschine gebaut, obwohl das Gerät ähnliche Eigenschaften mit anderen Gerätetypen teilt.

Mit anderen Worten besteht hier herkömmlicherweise keine Dateninteroperabilität. Die Maschinen oder Geräte sind hierfür nicht entwickelt. Das heißt, dass herkömmlicherweise eine Applikation, die für ein Feldgerät A erstellt ist, nicht automatisch mit einem Feldgerät B funktioniert. Demnach sind Applikationen herkömmlicherweise gerätespezifisch programmiert. Soll eine Applikation auch für ein weiteres Gerät verwendet werden, so ist ein Re-Engineering oder Re-Writing der Applikation notwendig.

Auch eine Standardisierung der Schnittstellen löst dieses Problem der fehlenden Dateninteroperabilität nur bedingt, da die Standardisierung von Schnittstellen stets nur einen kleinsten gemeinsamen Nenner von Funktionalität und Qualität, insbesondere Performance der Datenübertragung, zulässt. Ein Beispiel für einen solchen Standard ist OPC UA (UA; unified architecture). OPC UA ist ein industrielles M2M-Kommunikationsprotokoll. Beispielsweise werden allerdings auch bei OPC UA keine gerätespezifischen Hochfrequenzdaten, wie Positionen, Drehzahl und Ströme bei Lage-, Drehzahl- und Stromregelkreisen hierfür üblicherweise 500 Hz-Frequenz und höher, zu den Applikationen übertragen.

Demnach besteht eine Aufgabe der vorliegenden Erfindung darin, die Kopplung einer Maschine, insbesondere die kommunikationstechnische Kopplung, mit einer Mehrzahl von Applikationen zu verbessern.

Gemäß einem ersten Aspekt wird eine Vorrichtung zur Kopplung einer Maschine, insbesondere einer Werkzeugmaschine, aufweisend eine Anzahl N von Datenquellen zur Bereitstellung von Daten der Maschine in datenquellenspezifischen Datenformaten mit einer Mehrzahl von Applikationen vorgeschlagen. Die Vorrichtung umfasst eine Transformations-Einheit, welche dazu eingerichtet ist, in einem der datenquellenspezifischen Datenformate vorliegende Daten einer der N Datenquellen in Daten eines generischen semantischen Datenmodells für die Applikationen zu transformieren und/oder in dem generischen semantischen Datenmodell vorliegende Daten einer der Applikationen in Daten eines der datenquellenspezifischen Datenformate für eine der N Datenquellen zu transformieren.

Durch die Transformations-Einheit wird die kommunikationstechnische Kopplung zwischen der Maschine und den Applikationen verbessert. Insbesondere stellt die Transformations-Einheit Dateninteroperabilität zwischen der jeweiligen Applikation und der jeweiligen Datenquelle der Maschine her.

Dadurch, dass die Applikation ein generisches semantisches Datenmodell nutzt, kann die Applikation für eine Mehrzahl unterschiedlicher Datenquellen, die auch unterschiedliche datenquellenspezifisches Datenformate verwenden können, eingesetzt werden. Des Weiteren kann die jeweilige Applikation aufgrund dessen auch für unterschiedliche Maschinen eingesetzt werden.

Aufgrund der Funktionalität der Transformations-Einheit kann die Applikation das generische semantische Datenmodell nutzen, so dass es vorteilhafterweise einem Applikationsentwickler ermöglicht ist, auf schnelle und kostengünstige Weise Applikationen für verschiedene Maschinen und/oder Datenquellen zu schreiben. Aufgrund der Funktionalität der Transformations-Einheit kann eine Applikation, die mit einer bestimmten Maschine funktioniert, auch für andere ähnliche Maschinen eingesetzt werden.

Die geschaffene Dateninteroperabilität kann ein wesentlicher Baustein für ein Edge-Computing-System sein, bei welchem Drittanbieter von Applikationen rund um eine Edge-Computing-Hardware- und -Softwareplattform Applikationen anbieten können.

Die Maschine ist beispielsweise eine Werkzeugmaschine oder ein Gerät, wie ein Feldgerät. Die Maschine wird durch eine Steuerungsvorrichtung, wie beispielsweise eine Sinumerik, eine Simotion oder eine Simatik gesteuert. Die vorgeschlagene Vorrichtung ist beispielsweise als Edge-Controller ausgebildet und mit der Steuerungsvorrichtung der Maschine koppelbar.

Beispiele für Datenquellen, die ihre Daten in datenquellenspezifischen Datenformaten bereitstellen, umfassen an der Maschine angeordnete Sensoren, Kameras zur Aufnahme von Bildern der Maschine, Mikrofone zur Aufnahme von Schall in einem Bereich der Maschine und Aktoren der Maschine.

Das datenquellenspezifische Datenformat ist für die ausgebende Datenquelle spezifisch und damit nicht generisch und basiert beispielsweise auf einem einfachen numerischen Code.

Eine Applikation oder Anwendung ist eine Anwendungssoftware oder ein Anwendungsprogramm, welches beispielsweise als Computerprogramm ausgeführt ist, um eine Funktionalität zu bearbeiten oder zu unterstützen, oder um Daten der Maschine auszuwerten. Beispielsweise kann eine Applikation ein NC-Programm hinsichtlich Geschwindigkeit, Verschleiß, Energieaufwand oder weiterer Eigenschaften von Produktionsprozessen optimieren. Andere Applikationen können beispielsweise bei bevorstehenden Maschinen- oder Komponentenausfällen der Maschinen warne, optimale Wartungszyklen der Maschine planen und/oder proaktiv Hinweise für eine prädiktive Instandhaltung der Maschine geben.

Die Applikation nutzt das generische semantische Datenmodell und ist damit nicht spezifisch für eine Maschine oder ein bestimmtes Gerät. Insbesondere ist das generische semantische Datenmodell ein generisches Datenmodell, welches eine oder mehrere technische oder prozesstechnische Domänen, beispielsweise von Werkzeugmaschinen, beschreibt.

Gemäß einer Ausführungsform umfasst die Transformations-Einheit ein erstes Transformations-Mittel und ein zweites Transformations-Mittel. Dabei ist das erste Transformations-Mittel dazu eingerichtet, die in einem der datenquellenspezifischen Datenformate vorliegenden Daten in Daten eines datenquellenspezifischen semantischen Datenmodells zu transformieren. Ferner ist das zweite Transformations-Mittel dazu eingerichtet, die Daten des datenquellenspezifischen semantischen Datenmodells in die Daten des generischen semantischen Datenmodells zu transformieren.

Gemäß einer weiteren Ausführungsform umfasst die Transformations-Einheit ferner ein drittes Transformations-Mittel und ein viertes Transformations-Mittel. Dabei ist das dritte Transformations-Mittel dazu eingerichtet, die Daten des generischen semantischen Datenmodells von einer der Applikationen in Daten eines der datenquellenspezifischen semantischen Datenmodelle für eine der N Datenquellen zu transformieren. Des Weiteren ist das vierte Transformations-Mittel dazu eingerichtet, die Daten des datenquellenspezifischen semantischen Datenmodells in Daten des datenquellenspezifischen Datenformats der Datenquelle zu transformieren.

Gemäß einer weiteren Ausführungsform ist das zweite Transformations-Mittel dazu eingerichtet, die Daten des datenquellenspezifischen semantischen Datenmodells mittels eines semantischen Mappings in die Daten des generischen semantischen Datenmodells zu transformieren, wobei das dritte Transformations-Mittel dazu eingerichtet ist, die Daten des generischen semantischen Datenmodells von einer der Applikationen mittels eines inversen semantischen Mappings in die Daten eines der datenquellenspezifischen semantischen Datenmodelle für eine der N Datenquellen zu transformieren.

Das semantische Mapping umfasst vorzugsweise Abbildungsregeln, das generische semantische Datenmodell mit datenquellenspezifischen semantischen Datenmodellen verknüpfen. Die Logik der Verknüpfung kann hierbei beispielsweise eine Vererbung auf Konzeptebene (z. B. eine Welle ist eine Maschinenkomponente), eine Vererbung auf Relationsebene (z. B. Bohren vererbt von Prozessen) oder eine invertierbare, beliebig komplexe und verschachtelte mathematische Funktion (z. B. Rotationen/min = Rotationen/s·60) sein. Zusätzlich kann jede Art von komplexer, logischer Abbildungsfunktion als Teil des semantischen Mappings möglich sein. Je Datenquelle wird insbesondere eine Menge an semantischen Abbildungen, die datenquellenspezifische semantische Datenmodelle auf das generische semantische Datenmodell mappt, eingesetzt. Das Format der jeweiligen Abbildung oder Abbildungsvorschrift ist vorzugsweise in Form von Axiomen, bei Bedarf einer höheren Ausdrucksstärke für die Mappings auch in Kombination mit semantischen Regeln und mathematischen Funktionen.

Die vorgeschlagenen Transformations-Mittel haben den Vorteil, bei der Übersetzung zwischen datenquellenspezifischem Datenformaten und generischem semantischem Datenmodell eine Zwischenstufe zu schaffen, nämlich die datenquellenspezifischen semantischen Datenmodelle. Diese Zwischenstufe der datenquellenspezifischen semantischen Datenmodelle hat den Vorteil, dass insbesondere das Mapping oder die Übersetzung zwischen datenquellenspezifischem Datenformat und datenquellenspezifischem semantischem Datenmodell automatisiert, auch automatisiert in der Konzeption, geschaffen werden kann.

Das nachfolgende Beispiel kann die Funktionalität der vorgeschlagenen Vorrichtung bzw. der Transformations-Einheit illustrieren: Eine Applikation kann sich auf Daten bestimmter Datenquellen einer Maschine subskribieren. Dazu kann die Applikation eine Subskription basierend dem generischen semantischen Datenmodell verwenden. Dadurch, dass die Anwendung eine Subskription basierend auf dem generischen semantischen Datenmodell verwenden kann, muss die Anwendung bei ihrer Subskription weder spezifische Datenquellen explizit benennen oder deren spezifische Datenmodelle oder Datenformate kennen.

Für eine jede Datenquelle kann ein Set von zugeordneten Subskriptionen von Applikationen bereitgestellt werden. Hierzu kann ein semantisches Subskriptionsmapping von Subskriptionen in dem generischen semantischen Datenmodell, bereitgestellt von den Applikationen, auf das Set von zugeordneten Subskriptionen in den datenquellenspezifischen Datenformaten bereitgestellt werden. Neben den Subskriptionen der Applikationen in dem generischen semantischen Datenmodell nutzt das semantische Subskriptionsmapping ein semantisches Mapping zwischen den datenquellenspezifischen Datenformaten oder den datenquellenspezifischen semantischen Datenmodellen und dem generischen semantischen Datenmodell.

Das Mapping zwischen datenquellenspezifischem semantischem Datenmodell und generischem semantischem Datenmodell wird dann verwendet, wenn die Transformations-Einheit besagte Transformations-Mittel zur Bereitstellung der Zwischenstufe aufweist. Ansonsten nutzt die Transformations-Einheit ein direktes Mapping zwischen dem jeweiligen datenquellenspezifischen Datenformat und dem generischen semantischen Datenmodell.

Das jeweilige datenquellenspezifische semantische Datenmodell ist ein Datenmodell zur semantischen Beschreibung der Konzepte, Relationen und Eigenschaften von Daten, die von der jeweiligen Datenquellen zur Verfügung gestellt wird. Eine derartige Beschreibung ist spezifisch für die jeweilige Datenquelle und spezifiziert vorzugsweise die Datenschnittstelle mit der Datenquelle, beispielsweise mit dem Sensor oder dem Aktor.

Gemäß einer weiteren Ausführungsform ist die Vorrichtung als ein Edge-Controller ausgebildet, welcher mit einer Steuerungsvorrichtung zur Steuerung der Maschine koppelbar ist.

Der Edge-Controller ist mit der zentralen Steuerungsvorrichtung der Maschine koppelbar. Der Edge-Controller ist damit eine Zusatzhardware für die Steuerungsvorrichtung. Für das Beispiel der Sinumerik als Steuerungsvorrichtung kann der Edge-Controller auch als Sinumerik-Edge-Box bezeichnet werden.

Gemäß einer weiteren Ausführungsform ist die Vorrichtung als ein Controller ausgebildet, welcher in einer Steuerungsvorrichtung zur Steuerung der Maschine integriert ist.

Bei dieser Ausführungsform ist die vorgeschlagene Vorrichtung in der Steuerungsvorrichtung integriert.

Gemäß einer weiteren Ausführungsform ist die Vorrichtung als ein FPGA (Field Programmable Gate Array) oder als ein ASIC (Application-Specific Integrated Circuit) ausgebildet.

Die Ausbildung als FPGA oder als ASIC hat Vorteile in der Performance sowie in den Kosten.

Gemäß einer weiteren Ausführungsform umfasst das generische semantische Datenmodell Entitäten zu der Maschine, Eigenschaften der Entitäten und/oder Beziehungen zwischen zwei oder mehreren der Entitäten.

Gemäß einer weiteren Ausführungsform ist das generische semantische Datenmodell in einer Hierarchie semantischer Abstraktionsstufen strukturiert. Dabei ist der jeweiligen Abstraktionsstufe ein bestimmtes Teil-Datenmodell zugeordnet ist.

Vorteilhafterweise können bei dieser Ausführungsform verschiedene Abstraktionslevel verwendet werden.

Gemäß einer weiteren Ausführungsform umfassen die in der Hierarchie strukturierten bestimmten Teil-Datenmodelle ein semantisches IoT-Modell (IoT; Internet-of-Things), ein generisches semantisches Werkzeugmaschinen-Modell, ein einem der Hersteller der Werkzeugmaschine zugeordnetes semantisches Hersteller-Modell und/oder ein semantisches Endnutzer-Modell.

Je abstrakter ein bestimmtes Teil-Datenmodell ist, desto aufwendiger ist die Programmierung einer Applikation, die Daten auf Basis dieses Teil-Datenmodells verwendet. Allerdings ist es möglich, ein abstraktes Datenmodell zur Inbetriebnahme der Applikation zu verwenden sowie nachträglich zur Laufzeit durch spezifischere Teil-Datenmodelle zu erweitern. Beispielsweise kann ein sehr generisches IoT-Modell durch domänenspezifische Modelle, wie beispielsweise ein Werkzeugmaschinenmodell, ein Fräsprozessmodell, oder ein Alufelgenfräsprozessmodell, erweitert werden, ohne dass bereits existierende Applikationen geändert werden müssten.

Gemäß einer weiteren Ausführungsform ist eine Subskriptions-Einheit vorgesehen, welche dazu eingerichtet ist, eine Subskription einer der Applikationen auf bestimmte Daten der N Datenquellen zu empfangen, wobei die Subskription zumindest ein Axiom umfassend zumindest eine der Entitäten, zumindest eine der Eigenschaften der Entitäten und/oder zumindest eine der Beziehungen des generischen semantischen Datenmodells aufweist.

Die Subskription basiert auf einer oder mehreren Axiomen aus dem generischen semantischen Datenmodell. Beispielsweise fragt eine bestimmte Applikation nach X-, Y- und Z-Achsenpositionsdaten eines montierten Werkzeugs im dreidimensionalen Raum anhand des generischen semantischen Datenmodells.

Oben erwähntes semantisches Subskriptionsmapping kann Mappingvorschriften ausführen, um die Menge von Subskriptionen einer Applikation von dem generischen semantischen Datenmodell auf entsprechend logisch korrekte und vollständig abgebildete Mengen von Subskriptionen in datenquellenspezifischen semantischen Datenmodellen bzw. datenquellenspezifischen Datenformaten abzubilden.

Nach der Subskription können Applikationen über neue Daten entsprechend ihrer Subskriptionen informiert werden, allerdings nicht in Format und Semantik der Daten im jeweiligen datenquellenspezifischen semantischen Datenmodell oder datenquellenspezifischen Datenformat, sondern in Format und Semantik derselben Daten in dem generischen semantischen Datenmodellen.

Hierzu ist vorzugsweise eine Bereitstellungs-Einheit vorgesehen. Die Bereitstellungs-Einheit ist eingerichtet, der jeweiligen Applikation basierend auf ihrer von der Subskriptions-Einheit empfangenen Subskription die von den Datenquellen gelieferten und von der Transformations-Einheit in das generische semantische Datenmodell transformierte Daten bereitzustellen.

Insbesondere übernimmt die Bereitstellungs-Einheit die Bereitstellung der Daten zur Laufzeit. Auch die Bereitstellungs-Einheit wird vorzugsweise aufgrund von Perfomance- und Kostengründen in Hardware, beispielsweise als FPGA oder als ASIC, realisiert. Allerdings ist auch eine Softwarelösung für die Bereitstellungs-Einheit möglich. Die Bereitstellungs-Einheit führt insbesondere auch Mappingvorschriften aus, um die Daten der Datenquellen von der Semantik der datenquellenspezifischen semantischen Datenmodelle bzw. der datenquellenspezifischen Datenformate auf die Semantik des generischen Datenmodells abzubilden, welches von den subskribierten Applikationen erwartet wird.

Gemäß einer weiteren Ausführungsform ist die Bereitstellungs-Einheit ferner eingerichtet, einer Applikation basierend auf einer Anfrage der Applikation, die auf Daten einer bestimmten Datenquelle gerichtet ist, auch ohne eine Subskription die von dieser bestimmten Datenquelle gelieferten und von der Transformations-Einheit in das generische semantische Datenmodell transformierte Daten bereitzustellen.

Gemäß einer weiteren Ausführungsform umfassen die N Datenquellen zumindest einen an der Werkzeugmaschine angeordneten Sensor, zumindest eine Kamera zur Aufnahme von Bildern der Werkzeugmaschine, zumindest ein Mikrophon zur Aufnahme von Schall in einem Bereich der Werkzeugmaschine und/oder zumindest einen Aktor der Werkzeugmaschine.

Die jeweilige Einheit, zum Beispiel die Transformations-Einheit, die Subskriptions-Einheit oder die Bereitstellungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem zweiten Aspekt wird eine Anordnung mit einer Maschine, insbesondere einer Werkzeugmaschine, aufweisend eine Anzahl N von Datenquellen zur Bereitstellung von Daten der Maschine in datenquellenspezifischen Datenformaten, einer Mehrzahl von Applikationen und einer Vorrichtung zur Kopplung der Maschine mit den Applikationen gemäß dem ersten Aspekt oder einer der Ausführungsformen des ersten Aspekts vorgeschlagen. Die Anordnung ist beispielsweise ein Edge-Computing-System.

Gemäß einem dritten Aspekt wird ein Verfahren zur Kopplung einer Maschine, insbesondere einer Werkzeugmaschine, aufweisend eine Anzahl N von Datenquellen zur Bereitstellung von Daten der Maschine in datenquellenspezifischen Datenformaten mit einer Mehrzahl von Applikationen vorgeschlagen. Das Verfahren umfasst ein Transformieren von in einem der datenquellenspezifischen Datenformate vorliegende Daten einer der N Datenquellen in Daten eines generischen semantischen Datenmodells für eine der Applikationen und/oder ein Transformieren von in dem generischen semantischen Datenmodell vorliegende Daten einer der Applikationen in Daten eines der datenquellenspezifischen Datenformate für eine der N Datenquellen.

Die für die vorgeschlagene Vorrichtung beschriebenen Ausführungsformen und Merkmale gelten für das vorgeschlagene Verfahren entsprechend.

Gemäß einem vierten Aspekt wird ein Computerprogrammprodukt vorgeschlagen, welches auf einer programmgesteuerten Einrichtung die Durchführung des wie oben erläuterten Verfahrens gemäß dem zweiten Aspekt veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines ersten Ausführungsbeispiels einer Anordnung mit einer Maschine, einer Mehrzahl von Applikationen und einer Vorrichtung zur Kopplung der Maschine mit den Applikationen;
- Fig. 2: zeigt ein schematisches Blockdiagramm eines Ausführungsbeispiels einer Transformations-Einheit der Vorrichtung zur Kopplung der Maschine mit den Applikationen nach Fig. 1;
- Fig. 3: zeigt ein schematisches Blockdiagramm eines zweiten Ausführungsbeispiels einer Anordnung mit einer Maschine, einer Mehrzahl von Applikationen und einer Vorrichtung zur Kopplung der Maschine mit den Applikationen;
- Fig. 4: zeigt ein schematisches Blockdiagramm eines dritten Ausführungsbeispiels einer Anordnung mit einer Maschine, einer Mehrzahl von Applikationen und einer Vorrichtung zur Kopplung der Maschine mit den Applikationen;
- Fig. 5: zeigt ein schematisches Diagramm zur Illustrierung von Aspekten eines Verfahrens zur Kopplung einer Maschine mit Applikationen;
- Fig. 6: zeigt ein schematisches Diagramm zur Illustrierung von weiteren Aspekten eines Verfahrens zur Kopplung einer Maschine mit Applikationen;
- Fig. 7: zeigt ein schematisches Diagramm zur Illustrierung von weiteren Aspekten eines Verfahrens zur Kopplung einer Maschine mit Applikationen; und
- Fig. 8: zeigt ein schematisches Blockdiagramm eines vierten Ausführungsbeispiels einer Anordnung mit einer Maschine, einer Mehrzahl von Applikationen und einer Vorrichtung zur Kopplung der Maschine mit den Applikationen.
In den Figuren sind gleiche oder funktionsgleiche Elemente mit denselben Bezugszeichen versehen worden, sofern nichts anderes angegeben ist.

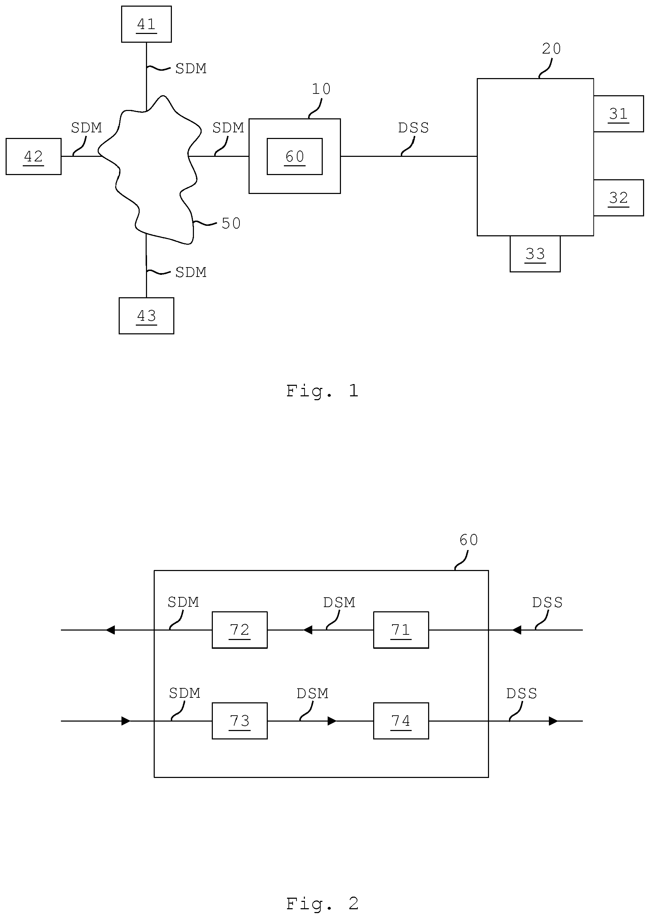

Fig. 1 zeigt ein schematisches Blockdiagramm eines ersten Ausführungsbeispiels einer Anordnung mit einer Vorrichtung 10 zur Kopplung einer Maschine 20 aufweisend eine Anzahl N von Datenquellen 31 - 33 zur Bereitstellung von Daten der Maschine 20 in datenquellenspezifischen Datenformaten DSS mit einer Anzahl von Applikationen 41 - 43.

Die Vorrichtung 10 der Fig. 1 koppelt die Maschine 20 mit den Applikationen 41 - 43. Beispielsweise ist die Vorrichtung 10 mit den Applikationen 41 - 43 über ein Netzwerk 50, beispielsweise ein LAN (LAN; Local Area Network) und/oder das Internet verbunden. Ohne Einschränkung der Allgemeinheit zeigt die Fig. 1 drei Applikationen 41 - 43. Die jeweilige Applikation 41 - 43 ist Teil eines Rechners oder eines Servers oder wird von einem solchen ausgeführt.

Die Maschine 20 der Fig. 1 ist beispielsweise eine Werkzeugmaschine. Der Werkzeugmaschine 20 der Fig. 1 sind drei Datenquellen 31 - 33 zugeordnet. Ohne Einschränkung der Allgemeinheit ist die Anzahl der Datenquellen 31 - 33 drei in Fig. 1 (N = 3).

Beispiele für die Datenquellen 31 - 33 umfassen an der Werkzeugmaschine 20 angeordnete Sensoren, Kameras zur Aufnahme von Bildern der Werkzeugmaschine 20, Mikrophone zur Aufnahme von Schall in einem Bereich der Werkzeugmaschine 20 und/oder Aktoren der Werkzeugmaschine 20. Die Datenquellen 31 - 33 stellen ihre Daten in datenquellenspezifischen Datenformaten DSS bereit. Die datenquellenspezifischen Datenformate DSS, die von den verschiedenen Datenquellen 31 - 33 genutzt werden, sind regelmäßig unterschiedlich zueinander.

Die Vorrichtung 10 umfasst eine Transformations-Einheit 60. Die Transformations-Einheit 60 ist dazu eingerichtet, in einem der datenquellenspezifischen Datenformate DSS vorliegende Daten einer der N Datenquellen 31 - 33 in Daten eines generischen semantischen Datenmodells SDM für die Applikationen 41 - 43 zu transformieren.

Des Weiteren ist die Transformations-Einheit 60 vorzugsweise dazu eingerichtet, in dem generischen semantischen Datenmodell SDM vorliegende Daten einer der Applikationen 41 - 43 in Daten eines der datenquellenspezifischen Datenformate DSS für eine der N Datenquellen 31 - 33 zu transformieren.

Das generische semantische Datenmodell SDM umfasst vorzugsweise Entitäten zu der Maschine 20, Eigenschaften der Entitäten und/oder Beziehungen zwischen zwei oder mehreren der Entitäten. Beispielsweise ist das generische semantische Datenmodell SDM in einer Hierarchie semantischer Abstraktionsstufen strukturiert. Dabei ist der jeweiligen Abstraktionsstufe vorzugsweise ein bestimmtes Teil-Datenmodell zugeordnet. Die in der Hierarchie strukturieren bestimmten Teil-Datenmodelle umfassen beispielsweise ein semantischen IoT-Modell, ein generisches semantisches Werkzeugmaschinen-Modell der Werkzeugmaschine 20, ein einem der Hersteller der Werkzeugmaschine 20 zugeordnetes semantisches Hersteller-Modell und/oder ein semantisches Endnutzer-Modell des Endnutzers der Werkzeugmaschine 20.

Fig. 2 zeigt ein schematisches Blockdiagramm eines Ausführungsbeispiels einer Transformations-Einheit 60 der Vorrichtung 10 zur Kopplung der Maschine 20 mit den Applikationen 41 - 43 nach Fig. 1.

Das Ausführungsbeispiel der Transformations-Einheit 60 nach Fig. 2 umfasst ein erstes Transformations-Mittel 71, ein zweites Transformations-Mittel 72, ein drittes Transformations-Mittel 73 und ein viertes Transformations-Mittel 74.

Dabei ist das erste Transformations-Mittel 71 dazu eingerichtet, die in einem der datenquellenspezifischen Datenformate DSS vorliegende Daten in Daten eines datenquellenspezifischen semantischen Datenmodells DSM zu transformieren. Weiter ist das zweite Transformations-Mittel 72 dazu eingerichtet, die Daten des datenquellenspezifischen semantischen Datenmodells DSM in Daten des generischen semantischen Datenmodells SDM zu transformieren. Damit behandeln das erste Transformations-Mittel 71 und das zweite Transformations-Mittel 72 den Datenpfad zwischen den N Datenquellen 31 - 33 hin zu den Applikationen 41 - 43.

Für den umgekehrten Datenpfad von den Applikationen 41 - 43 hin zu den Datenquellen 31 - 33 sind das dritte Transformations-Mittel 73 und das vierte Transformations-Mittel 74 vorgesehen. Das dritte Transformations-Mittel 73 ist dabei dazu eingerichtet, die Daten des generischen semantischen Datenmodells SDM von einer der Applikationen 41 - 43 in Daten eines der datenquellenspezifischen semantischen Datenmodelle DSM für eine der N Datenquellen 31 - 33 zu transformieren. Des Weiteren ist das vierte Transformations-Mittel 74 dazu eingerichtet, die Daten des datenquellenspezifischen semantischen Datenmodells DSM in Daten des datenquellenspezifischen Datenformats DSS der Datenquelle 31 - 33, welche die Senke dieser Daten sein soll, zu transformieren.

Weiter mit Bezug zur Fig. 2 ist das zweite Transformations-Mittel 72 insbesondere dazu eingerichtet, die Daten des datenquellenspezifischen semantischen Datenmodells DSM mittels eines semantischen Mappings in die Daten des generischen semantischen Datenmodells SDM zu transformieren. Dabei ist das dritte Transformations-Mittel 73 weiter dazu eingerichtet, die Daten des generischen semantischen Datenmodells SDM von einer der Applikation 41 - 43 mittels eines inversen semantischen Mappings in die Daten eines der datenquellenspezifischen semantischen Datenmodelle DSM für eine der N Datenquellen 31 - 33 zu transformieren.

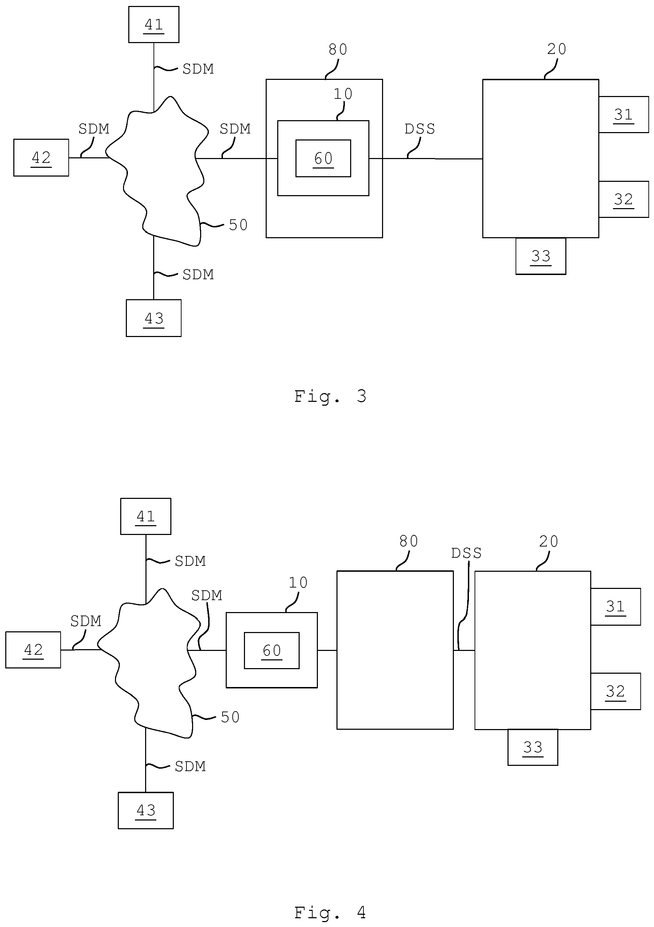

In Fig. 3 ist ein schematisches Blockdiagramm eines zweiten Ausführungsbeispiels einer Anordnung mit einer Maschine 20, einer Mehrzahl von Applikationen 41 - 43 und einer Vorrichtung 10 zur Kopplung der Maschine 20 mit den Applikationen 41 - 43 dargestellt.

Das zweite Ausführungsbeispiel nach Fig. 3 umfasst alle Merkmale des ersten Ausführungsbeispiels der Fig. 1 und zeigt darüber hinaus, dass die Vorrichtung 10 als ein Controller ausgebildet ist, welcher in einer Steuerungsvorrichtung 80 zur Steuerung der Maschine 20 integriert ist. Die Steuerungsvorrichtung 80 ist dabei beispielsweise eine Sinumerik, eine Simotion oder eine Simatik.

Fig. 4 zeigt ein schematisches Blockdiagramm eines dritten Ausführungsbeispiels einer Anordnung mit einer Maschine 20, einer Mehrzahl von Applikationen 41 - 43 und einer Vorrichtung 10 zur Kopplung der Maschine 20 mit den Applikationen.

Das dritte Ausführungsbeispiel nach Fig. 4 unterscheidet sich von dem zweiten Ausführungsbeispiel nach Fig. 3 dahingehend, dass die Vorrichtung 10 als ein Edge-Controller ausgebildet ist, welcher nicht in der Steuerungsvorrichtung 80 integriert ist, sondern neben der Steuerungsvorrichtung 80 anordenbar ist und mit der Steuerungsvorrichtung 80 koppelbar ist. Der Edge-Controller 10 der Fig. 4 stellt damit eine Zusatz-Hardware für die Steuerungsvorrichtung 80 nach Fig. 4 dar.

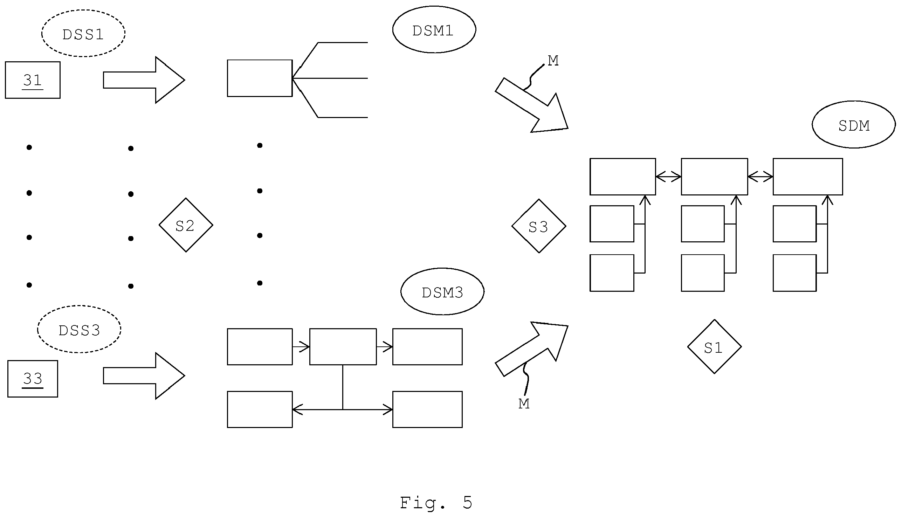

Die Fig. 5 bis 7 zeigen Aspekte eines Verfahrens zur Kopplung einer Maschine 20, insbesondere einer Werkzeugmaschine, aufweisend eine Anzahl N von Datenquellen 31 - 33 zur Bereitstellung von Daten der Maschine 20 in datenquellenspezifischen Datenformaten DSS mit einer Mehrzahl von Applikationen 41 - 43. Anordnungen mit einer solchen Maschine 20 und solchen Applikationen 41 - 43 sind zum Beispiel in den Fig. 1, 3 und 4 dargestellt.

Insbesondere zeigt die Fig. 5 Verfahrensschritte zum Design der Vorrichtung 10 zur Kopplung der Maschine 20 mit den Applikationen 41 - 43, wie in den Fig. 1, 3 und 4 beispielhaft dargestellt.

In der Fig. 5 bezeichnet eine Ellipse mit durchgezogener Linie ein Datenmodell, eine Ellipse mit gestrichelter Linie bezeichnet ein Datenformat und eine Raute bezeichnet einen Verfahrensschritt.

Das Beispiel der Fig. 5 umfasst die drei Verfahrensschritte S1 - S3:
Im Schritt S1 wird ein generisches semantisches Datenmodell SDM für die entsprechende Maschine 20 beziehungsweise deren zugeordneter Datenquellen 31 - 33 definiert. Das Datenmodel SDM ist dazu geeignet, für mehrere Applikationen 41 - 43 in einer Domäne verwendet zu werden. Im vorliegenden Beispiel ist das generische semantische Datenmodell SDM ein Werkzeugmaschinen-Domänen-Datenmodell. Beispielsweise liegt das generische semantische Datenmodell SDM in einer semantischen Datenmodell-Beschreibungssprache, vorzugsweise in OWL/RDF vor.

Im Schritt S2 werden das datenquellenspezifische Datenformat DSS1 der Datenquelle 31, das datenquellenspezifische Datenformat DSS2 der Datenquelle 32 und das datenquellenspezifische Datenformat DSS3 der Datenquelle 33 in datenquellenspezifische semantische Datenmodelle DSM1 - DSM3 übersetzt. Regelmäßig sind die datenquellenspezifischen Datenformate DSS1 - DSS3 unterschiedlich zueinander. Es ist aber auch möglich, dass beispielsweise zwei der datenquellenspezifischen Datenformate DSS1 und DSS3 identisch sind, so dass dann auch die entsprechenden datenquellenspezifischen semantischen Datenmodelle DSM1 und DSM3 identisch wären (nicht so in dem Beispiel der Fig. 5).

Die Übersetzung oder Extraktion von DSS auf DSM in dem Schritt S2 basiert beispielsweise auf Spezifikationen, publizierten Datenmodellen und/oder auf Laufzeitabfragen der Datenschemata, zum Beispiel OPC UA Datenmodellanfragen. Die DSM (DSM1 - DSM3) liegen am Ende des Schrittes S2 in einer semantischen Datenmodell-Beschreibungssprache vor, vorzugsweise in OWL/RDF.

Im Schritt S3 werden semantische Abbildungen M zwischen den einzelnen DSM (DSM1 - DSM3) und SDM (je eine getrennte Menge von Abbildungen pro DSM) definiert. Die semantischen Abbildungen M können mittels Axiomen aus einer Beschreibungslogik, mittels Regeln und invertierbarer mathematischer Funktionen erstellt werden. Das Format der Abbildungsmenge M ist vorzugsweise OWL/RDF mit optionalen Erweiterungen für semantische Regeln und semantisch beschriebenen Funktionen. Der Vorrichtung 10, insbesondere der Transformations-Einheit 60, werden insbesondere als Input zur Verfügung gestellt: DSS1 - DSS3, DSM1 - DSM3, alle M sowie SDM.

Nach erfolgreicher Konfiguration der Vorrichtung 10 gemäß Fig. 5 können sich die Applikationen 41 - 43 für Daten der Datenquellen 31 - 33 an der Vorrichtung 10 subskribieren.

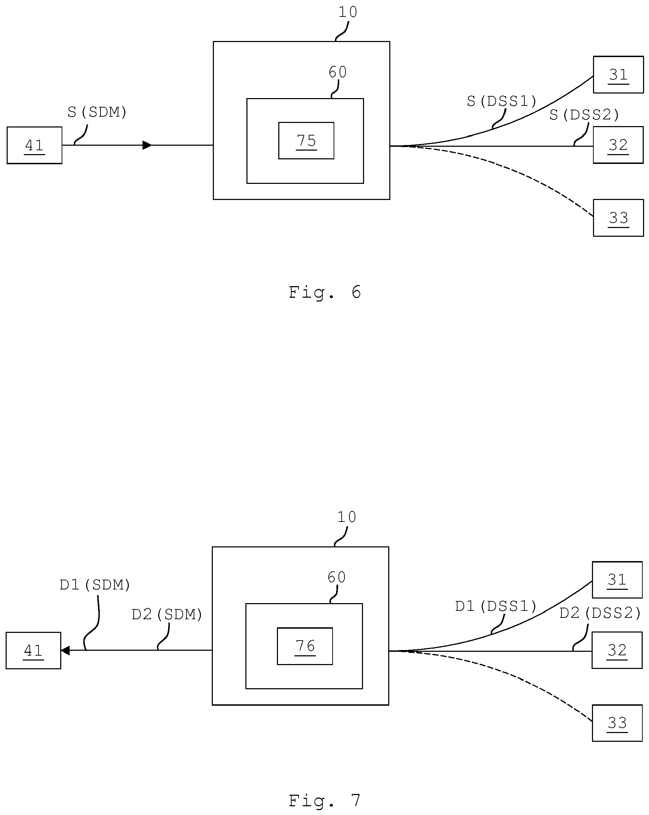

Hierzu zeigt die Fig. 6 ein Beispiel, bei dem die Vorrichtung 10 die Datenquellen 31 - 33 mit der Applikation 41 koppelt. Die Transformations-Einheit 60 der Fig. 6 umfasst eine Subskriptions-Einheit 75. Die Subskriptions-Einheit 75 ist dazu eingerichtet, eine Subskription S der Applikation 41 auf bestimmte Daten der Datenquellen 31 - 33 zu empfangen. Beispielsweise subskribiert sich die Applikation 41 mit ihrer Subskription S auf Daten der Datenquelle 31 und der Datenquelle 32. Die Subskription S weist zumindest ein Axiom umfassend zumindest eine der Entitäten, zumindest eine der Eigenschaften der Entitäten und/oder zumindest eine der Beziehungen des generischen semantischen Datenmodells SDM auf. Die Subskription S kann auch als Subskriptions-Anfrage bezeichnet werden.

Nach erfolgter Konfiguration der Vorrichtung 10 und nach dem Start wartet die Subskriptions-Einheit 75 auf Subskriptions-Anfragen S der Applikationen 41 - 43. Die Subskriptions-Anfragen S werden anhand der Semantik von SDM dargestellt, folglich kennt die jeweilige Applikation 41 - 43 das generische semantische Datenmodell SDM und muss nicht DSS oder DSM kennen. Dies ermöglicht es einem Applikations-Entwickler, die Applikation 41 - 43 unabhängig von der Art und Anzahl der konkreten Datenquellen 31 - 33 zu entwickeln.

Erhält die Subskriptions-Einheit 75 eine gültige Subskription S in der SDM-Semantik, so übersetzt die Subskriptions-Einheit 75 diese in eine oder mehrere Subskriptionen in DSS. Hierzu zeigt die Fig. 6 die Subskription S in SDM als S(SDM). Die übersetzten Subskriptionen für die Datenquelle 31 lautet S(DSS1) und die übersetzte Subskription für die Datenquelle 31 lautet S(DSS2). Eine De-Subskription ist entsprechend möglich.

Nach erfolgreicher Konfiguration und Subskription kann die Vorrichtung 10 im Betrieb der Maschine 20 verwendet werden. Hiermit können nun Daten, die von den Datenquellen 31 - 33 stammen, der subskribierten Applikation 41 zur Verfügung gestellt werden. Dies ist beispielhaft in Fig. 7 dargestellt. Die Transformations-Einheit 60 der Fig. 7 umfasst hierzu eine Bereitstellungs-Einheit 76. Die Bereitstellungs-Einheit 76 ist dazu eingerichtet, der subskribierten Applikation 41 basierend auf ihrer von der Subskriptions-Einheit 75 (siehe Fig. 6) empfangenen Subskription S die von den Datenquellen, im vorliegenden Beispiel von den Datenquellen 31 und 32, gelieferten und von der Transformations-Einheit 60 in das generische semantische Datenmodell SDM transformierte Daten bereitzustellen.

Wie oben dargestellt, ist die Applikation 41 in dem vorliegenden Beispiel für Daten der Datenquelle 31 und für Daten der Datenquelle 32 subskribiert. Gemäß Fig. 7 stellt die Datenquelle 31 erste Daten D1(DSS1) in einem ersten datenquellenspezifischen Datenformat DSS1 der Vorrichtung 10 bereit. Entsprechend stellt die zweite Datenquelle 32 ihre Daten D2(DSS2) in einem zweiten datenquellenspezifischen Datenformat DSS2 bereit. Die Transformations-Einheit 60 übersetzt D1(DSS1) in D1(SDM) und D2(DSS2) in D2(SDM). Die in das generische semantische Datenmodell SDM übersetzten Daten D1(SDM) und D2(SDM) werden von der Bereitstellung-Einheit 76 der subskribierten Applikation 41 bereitgestellt.

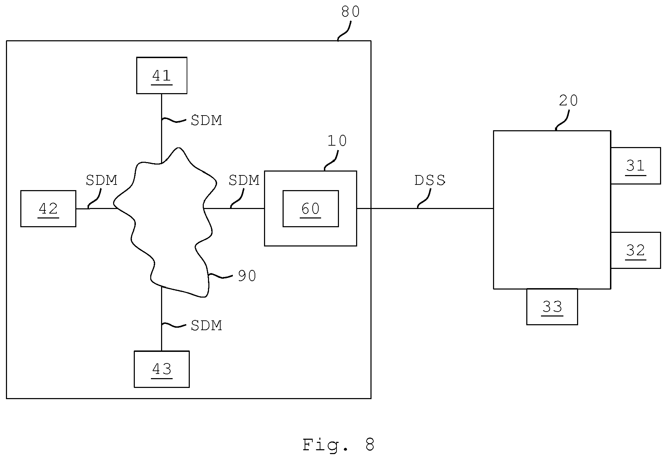

In Fig. 8 ist ein schematisches Blockdiagramm eines vierten Ausführungsbeispiels einer Anordnung mit einer Maschine 20, einer Mehrzahl von Applikationen 41 - 43 und einer Vorrichtung 10 zur Kopplung der Maschine 20 mit den Applikationen 41 - 43 dargestellt.

Das vierte Ausführungsbeispiel nach Fig. 8 umfasst alle Merkmale des ersten Ausführungsbeispiels der Fig. 1 und zeigt darüber hinaus eine Edge-Box 80, zum Beispiel eine SINUMERIK-Edge-Box.

Die Edge-Box 80 der Fig. 8 umfasst die Vorrichtung 10 sowie die Applikationen 41 - 43. Die Vorrichtung 10 und die Applikationen 41 - 43 sind mittels eines Datenbusses 90 verbunden. Auch die Maschine 20 kann über den Datenbus 90 verbunden sein (nicht gezeigt in Fig. 8).

Obwohl die vorliegende Erfindung anhand von Ausführungsbeispielen beschrieben wurde, ist sie vielfältig modifizierbar.

## Patentansprüche

1. Vorrichtung (10) zur Kopplung einer Maschine (20), insbesondere einer Werkzeugmaschine, aufweisend eine Anzahl N von Datenquellen (31 - 33) zur Bereitstellung von Daten der Maschine (20) in datenquellenspezifischen Datenformaten (DSS) mit einer Mehrzahl von Applikationen (41 - 43), mit:
einer Transformations-Einheit (60), welche dazu eingerichtet ist, in einem der datenquellenspezifischen Datenformate (DSS) vorliegende Daten einer der N Datenquellen (31 - 33) in Daten eines generischen semantischen Datenmodells (SDM) für die Applikationen (41 - 43) zu transformieren und/oder in dem generischen semantischen Datenmodell (SDM) vorliegende Daten einer der Applikationen (41 - 43) in Daten eines der datenquellenspezifischen Datenformate (DSS) für eine der N Datenquellen (31 - 33) zu transformieren.

2. Vorrichtung nach Anspruch 1,
**dadurch gekennzeichnet, dass** die Transformations-Einheit (60) ein erstes Transformations-Mittel (71) und ein zweites Transformations-Mittel (72) aufweist, wobei das erste Transformations-Mittel (71) dazu eingerichtet ist, die in einem der datenquellenspezifischen Datenformate (DSS) vorliegenden Daten in Daten eines datenquellenspezifischen semantischen Datenmodells (DSM) zu transformieren, und wobei das zweite Transformations-Mittel (72) dazu eingerichtet ist, die Daten des datenquellenspezifischen semantischen Datenmodells (DSM) in die Daten des generischen semantischen Datenmodells (SDM)zu transformieren.

3. Vorrichtung nach Anspruch 2,
**dadurch gekennzeichnet, dass** die Transformations-Einheit (60) ferner ein drittes Transformations-Mittel (73) und ein viertes Transformations-Mittel (74) aufweist, wobei das dritte Transformations-Mittel (73) dazu eingerichtet ist, die Daten des generischen semantischen Datenmodells (SDM) von einer der Applikationen (41 - 43) in Daten eines der datenquellenspezifischen semantischen Datenmodelle (DSM) für eine der N Datenquellen (31 - 33) zu transformieren, und wobei das vierte Transformations-Mittel (74) dazu eingerichtet ist, die Daten des datenquellenspezifischen semantischen Datenmodells (DSM) in Daten des datenquellenspezifischen Datenformats (DSS) der Datenquelle (31 - 33) zu transformieren.

4. Vorrichtung nach Anspruch 3,
**dadurch gekennzeichnet, dass** das zweite Transformations-Mittel (72) dazu eingerichtet ist, die Daten des datenquellenspezifischen semantischen Datenmodells (DSM) mittels eines semantischen Mappings (M) in die Daten des generischen semantischen Datenmodells (SDM) zu transformieren, und wobei das dritte Transformations-Mittel (73) dazu eingerichtet ist, die Daten des generischen semantischen Datenmodells (SDM) von einer der Applikationen (41 - 43) mittels eines inversen semantischen Mappings in die Daten eines der datenquellenspezifischen semantischen Datenmodelle (DSM) für eine der N Datenquellen (31 - 33) zu transformieren.

5. Vorrichtung nach einem der Ansprüche 1 bis 4,
**dadurch gekennzeichnet, dass** die Vorrichtung (10) als ein Edge-Controller ausgebildet ist, welcher mit einer Steuerungsvorrichtung (80) zur Steuerung der Maschine (20) koppelbar ist.

6. Vorrichtung nach einem der Ansprüche 1 bis 4,
**dadurch gekennzeichnet, dass** die Vorrichtung (10) als ein Controller ausgebildet ist, welcher in einer Steuerungsvorrichtung (80) zur Steuerung der Maschine (20) integriert ist.

7. Vorrichtung nach einem der Ansprüche 1 bis 6,
**dadurch gekennzeichnet, dass** die Vorrichtung (10) als ein FPGA oder als ein ASIC ausgebildet ist.

8. Vorrichtung nach einem der Ansprüche 1 bis 7,
**dadurch gekennzeichnet, dass** das generische semantische Datenmodell (SDM) Entitäten zu der Maschine (20), Eigenschaften der Entitäten und/oder Beziehungen zwischen zwei oder mehreren der Entitäten umfasst.

9. Vorrichtung nach Anspruch 8,
**dadurch gekennzeichnet, dass** das generische semantische Datenmodell (SDM) in einer Hierarchie semantischer Abstraktionsstufen strukturiert ist, wobei der jeweiligen Abstraktionsstufe ein bestimmtes Teil-Datenmodell zugeordnet ist.

10. Vorrichtung nach Anspruch 9,
**dadurch gekennzeichnet, dass** die in der Hierarchie strukturierten bestimmten Teil-Datenmodelle ein semantisches IoT-Modell, ein generisches semantisches Werkzeugmaschinen-Modell, ein einem der Hersteller der Werkzeugmaschine zugeordnetes semantisches Hersteller-Modell und/oder ein semantisches Endnutzer-Modell umfassen.

11. Vorrichtung nach einem der Ansprüche 1 bis 10,
**dadurch gekennzeichnet, dass** die Vorrichtung (10) eine Subskriptions-Einheit (75) aufweist, welche dazu eingerichtet ist, eine Subskription (S) einer der Applikationen (41) auf bestimmte Daten der N Datenquellen (31 - 33) zu empfangen, wobei die Subskription (S) zumindest ein Axiom umfassend zumindest eine der Entitäten, zumindest eine der Eigenschaften der Entitäten und/oder zumindest eine der Beziehungen des generischen semantischen Datenmodells (SDM) aufweist.

12. Vorrichtung nach Anspruch 11,
**dadurch gekennzeichnet, dass** die Vorrichtung (10) eine Bereitstellungs-Einheit (76) aufweist, welche dazu eingerichtet ist, der jeweiligen Applikation basierend auf ihrer von der Subskriptions-Einheit (75) empfangenen Subskription (S) die von den Datenquellen (31 - 33) gelieferten und von der Transformations-Einheit (60) in das generische semantische Datenmodell (SDM) transformierte Daten bereitzustellen.

13. Vorrichtung nach einem der Ansprüche 1 bis 12,
**dadurch gekennzeichnet, dass** die N Datenquellen (31 - 33) zumindest einen an der Werkzeugmaschine angeordneten Sensor, zumindest eine Kamera zur Aufnahme von Bildern der Werkzeugmaschine, zumindest ein Mikrophon zur Aufnahme von Schall in einem Bereich der Werkzeugmaschine und/oder zumindest einen Aktor der Werkzeugmaschine umfassen.

14. Verfahren zur Kopplung einer Maschine (20), insbesondere einer Werkzeugmaschine, aufweisend eine Anzahl N von Datenquellen (31 - 33) zur Bereitstellung von Daten der Maschine (20) in datenquellenspezifischen Datenformaten (DSS) mit einer Mehrzahl von Applikationen (41 - 43), mit:
Transformieren von in einem der datenquellenspezifischen Datenformate (DSS) vorliegende Daten einer der N Datenquellen (31 - 33) in Daten eines generischen semantischen Datenmodells (SDM) für eine der Applikationen (41 - 43) und/oder Transformieren von in dem generischen semantischen Datenmodell (SDM) vorliegende Daten einer der Applikationen (41 - 43) in Daten eines der datenquellenspezifischen Datenformate (DSS) für eine der N Datenquellen (31 - 33).

15. Computerprogrammprodukt, welches auf einer programmgesteuerten Einrichtung die Durchführung des Verfahrens nach Anspruch 14 veranlasst.
